# EUROPÄISCHE PATENTSCHRIFT

(11) **EP 1 941 179 B1**
(45) Veröffentlichungstag und Bekanntmachung des Hinweises auf die Patenterteilung: **23.09.2009**
(21) Anmeldenummer: 06806324.7
(22) Anmeldetag: 17.10.2006
(51) Int. Cl.: F16D 65/21, F16D 65/20

(54) **SCHEIBENBREMSE MIT ELEKTROMOTORISCHEM AKTUATOR IN SELBSTVERSTÄRKENDER BAUART**
DISC BRAKE WITH A SELF-ENERGISING ELECTRIC MOTOR ACTUATOR
FREIN A DISQUE COMPORTANT UN ACTIONNEUR A MOTEUR ELECTRIQUE DE TYPE AUTO-AMPLIFIE

(30) Priorität: 18.10.2005 DE 102005049786
(43) Veröffentlichungstag der Anmeldung: 09.07.2008
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(74) Vertreter: Mattusch, Gundula
(86) Internationale Anmeldenummer: PCT/EP2006/009989
(87) Internationale Veröffentlichungsnummer: WO 2007/045430

(56) Entgegenhaltungen:
- WO-A2-02/25137
- DE-A1- 10 105 540
- DE-A1- 10 347 942
- DE-A1- 19 802 386
- DE-U1- 29 901 831
- US-A1- 3 236 336
- US-A1- 2004 026 183
- US-A1- 2005 126 864

## Beschreibung

Die Erfindung betrifft eine Scheibenbremse mit elektromotorischem Aktuator, der auf eine Zuspannvorrichtung zum Zuspannen wenigstens eines Bremsbelages in Richtung einer Bremsscheibe einwirkt, wobei die Zuspannvorrichtung eine bremseninterne Hydraulikanordnung aufweist und in selbstverstärkender Bauart ausgelegt ist.

Scheibenbremsen mit elektromotorischen Aktuatoren, die auf eine Zuspannvorrichtung einwirken - beispielsweise einen Drehhebel mit diesem nachgeordneten Druckstücken - sind in verschiedensten Ausgestaltungen bekannt. Es ist auch bekannt, die Scheibenbremsen in selbstverstärkender Bauart auszugestalten, um den Elektromotor als Antrieb kleiner dimensionieren zu können. Beispiele für derartige Bremsen zeigen die DE 101 05 752 A1 und die DE 103 24 424 A1. Die bekannten Konzepte können in der Praxis nicht überzeugen. Es besteht daher der Bedarf nach neuen Lösungswegen.

Die für die elektrische Zustellung maximal benötigte Motorleistung sowie die entsprechenden Getriebe zur Kraftübertragung bilden einen entscheidenden Kostenfaktor. Der Reibwert des Bremsbelags ändert sich vor allem infolge von Erwärmung, die zum Beispiel bei Scheibenbremsen für LKW eine besondere Rolle spielt. Die hierbei erforderliche Motorleistung ist erheblich und bringt zusätzliche Mehrkosten für die Bereitstellung der elektrischen Versorgung.

Eine Scheibenbremse mit einer Zuspannvorrichtung mit V-förmigen Stützhebeln ist aus der DE 198 92 386 bekannt.

Eine Scheibenbremse mit bremseninterner Hydraulikanordnung ist beispielsweise aus der US 4,435,021 oder der DE 195 27 936 A1 bekannt.

Eine weitere Scheibenbremse ist aus der DE 101 05 540 A1 bekannt, in der ein Elektromotor als Aktuator über Kolben auf eine bremseninterne Hydraulikanordnung einwirkt. Diese Scheibenbremse ist aber hinsichtlich ihrer Selbstverstärkungswirkung nur relativ schwer steuer- oder regelbar.

Eine gattungsgemäße Scheibenbremse ist aus der US-A-2005/0126864 bekannt.

Es ist die Aufgabe der vorliegenden Erfindung, eine hinsichtlich ihrer Selbstverstärkungswirkung leichter steuer- oder regelbare Scheibenbremse zu schaffen.

Die Erfindung löst diese Aufgabe durch den Gegenstand des Anspruchs 1.

Vorteilhafte Ausgestaltungen sind den Unteransprüchen zu entnehmen.

So ermöglicht es die Erfindung bei einer selbstverstärkenden Bremse, in einfacher Weise immer eine optimale Kraftverstärkung einer solchen Bremse mit Selbstverstärkung zu erzielen, da während der Bremsung der Neigungs- bzw. Keilwinkel, unter welchem die Zuspannvorrichtung auf den Bremsbelag einwirkt, verstellbar ausgebildet ist. Hierdurch wird eine einfache und wirkungsvolle Keilwinkeleinstellung auch während eines Bremsvorgangs möglich.

Mittels einer Arbeitseinheit, die einen vorzugsweise einen hydraulischen Zylinder mit einem Stufenkolben aufweist, kann eine bremsverstärkende Wirkung nach dem Keileinzugprinzip genutzt werden, während gleichzeitig zu jedem Zeitpunkt einer Bremsung eine beliebige Keilwinkelanpassung in feinen Abstufungen erfolgen kann.

Die Erfindung weist damit eine Einrichtung zur Keilwinkelumstellung auf, die hydraulisch betätigt ist. Die Arbeitseinheit zur Keilwinkelumstellung könnte auch auf andere Weise als durch einen Kolben realisiert werden, wobei diese Ausführung bevorzugt wird.

Dabei kann auch eine Parkbremsfunktion integriert werden, welche sich nicht auf Hydraulik sondern auf rein mechanischen Komponenten abstützt. Mit Hilfe des hydraulischen Zylinders mit Kraftverstärkung, also der Arbeitseinheit, kann die Bremse wieder sicher gelöst werden.

Eine Keilwinkeleinstellung ist an sich bei selbstverstärkenden Bremsen aus der DE 1043 24 424 A1 bekannt. Dort ist aber eine separate Getriebeanordnung bzw. ein separater Aktuator für die Keilwinkeleinstellung neben der eigentlichen Zuspannvorrichtung zum Zuspannen der Scheibenbremse erforderlich.

Die bremseninterne Hydraulik erklaubt eine ganze Reihe von Ausgestaltungen von Scheibenbremsen mit einem elektromotorischen Aktuator. Der Elektromotor wird z.B. als Antrieb für eine Pumpe genutzt, die auf die bremseninterne Hydraulik einwirkt. Fluidleitungen zur Bremse hin sind damit nicht mehr erforderlich. Es genügt ein Kabel, beispielsweise mit einer Energieversorgungs- und einer Steuerleitung. Dennoch können die Vorteile der Hydraulikbauart damit auch bei einer primär elektromotorisch angetriebenen und über elektrische Signale angesteuerten Bremse genutzt werden.

Vorzugsweise weist dabei die Zuspannvorrichtung nach einer Weiterbildung eine Hebelanordnung mit wenigstens einem oder mehreren Hebel(n) auf, was bauliche und konstruktive Vorteile mit sich bringt, denn die Hebelanordnung ist besonders zuverlässig und sicher. Nach dem Stand der Technik wurden selbstverstärkende Bremsen dagegen in der Regel mit einer Keilanordnung ausgebildet. Diese Variante lässt sich mit der vorstehend erläuterten bremsinternen Hydraulik kombinieren, aber auch mit einer anderen Art von Zuspannvorrichtung ohne Hydraulik.

Vorzugsweise wird die Kraftübertragung dieser elektrisch angetriebenen Bremse mit Selbstverstärkung auf hydraulischer Basis durch Verwendung einer Bremsflüssigkeit vorgenommen. Mit Hilfe der hydraulischen Flüssigkeit lassen sich Kräfte und Wege auf einfache Art umformen.

Durch einen örtlich auf die Bremse begrenzten Hydraulikeinsatz kann bei Vermeidung von flexiblen Bremsleitungen und Ausdehnungsbehältern aus Kunststoff die Einlagerung von Wasser in der Bremsflüssigkeit weitgehend verhindert werden, was die Verfügbarkeit bedeutend verlängert.

In einer bevorzugten Ausführung sind die Hydraulikzylinder doppeltwirkend, wobei zwischen ihren ersten Druckanschlüssen die Arbeitseinheit und zwischen ihren zweiten Druckanschlüssen die Zahnradpumpe hydraulisch zwischengeschaltet ist. Somit lässt sich mittels dieser Anordnung und mit der Arbeitseinheit eine unterschiedliche Zustellung der Hydraulikzylinder erreichen, die sogar den Vorteil bietet, dass diese Zustellung mit einer Keilwinkeleinstellung gekoppelt ist, die auch während des Bremsens einstellbar ist.

In einer Ausführungsform ist die Wirkungsverbindung der Hydraulikzylinder mit Stützhebeln ausgebildet, wodurch sich ein vorteilhafter einfacher Aufbau mit geringen Abmessungen ergibt. Es ist dabei in einer alternativen Ausgestaltung vorteilhaft, dass die Stützhebel über Kraftverstärkerhebel mit den Hydraulikzylindern in Wirkungsverbindung stehen.

Besonders vorteilhaft ist eine weitere Ausführung, bei der die Stützhebel mit jeweils einem Ende über eine Kippvorrichtung mit dem Bremsbelag in Wirkungsverbindung stehen, wobei die Kippvorrichtung mit den Stützhebeln und dem Bremsbelag gelenkig verbunden ist. Somit ermöglicht sich vorteilhaft die Funktion einer mechanischen Parkbremse.

In einer anderen Ausgestaltung ist es vorteilhaft, dass der Bremsbelag mit einer Parallelführungseinrichtung versehen ist.

Nach einer bevorzugten Ausgestaltung ist vorgesehen, dass Hebel, insbesondere Stützhebel vorgesehen sind, die eine V-förmige Ausgestaltung aufweisen, wobei sie vorzugsweise jeweils mit einem Ende am Bremsbelag und jeweils mit zwei Enden am Nachstellhebel verschwenkbar gelagert sind, was einen Einsatz dieser Vorrichtung für Vorwärts- und Rückwärtsfahrt bei einem Fahrzeug ermöglicht. Eine umgekehrte Anordnung ist ebenfalls denkbar.

Vorteilhaft dabei ist außerdem, dass die Stützhebel in Richtung auf ihre mit den an dem Bremsbelag gelagerten Enden hin in Richtung der Schwenkachse dieser Enden verbreitert ausgebildet sind, wodurch eine vorteilhaft gleichmäßige Bremsbelagführung und Abnutzung in Querrichtung sichergestellt wird. Eine umgekehrte Anordnung mit den breiteren Enden zum Bremsbelag hin ist auch denkbar.

Nach einer weiteren bevorzugten Ausgestaltung ist vorgesehen, dass der Nachstellhebel im Bereich der Lagerungsstellen der jeweils zwei Enden der Stützhebel an seiner diesen Lagerungsstellen gegenüberliegenden Seite an einem Gegenlager verschwenkbar gelagert ist, wobei die Schwenkachsen dieser letzteren Lagerungsstellen parallel zu den Schwenkachsen der Lagerungsstellen der Stützhebel verlaufen und in Querrichtung der Stützhebel versetzt zu den Schwenkachsen der Lagerungsstellen der Stützhebel angeordnet sind. Der sich hieraus ergebende Vorteil besteht darin, dass diese Vorrichtung zusätzlich die Funktion einer mechanischen Parkbremse realisierbar macht. Dazu ist es zweckmäßig, dass die Zahnradpumpe mit dem Hydraulikzylinder für die Funktion einer Parkbremse hydraulisch verbindbar ausgebildet ist, wobei das Anziehen und Lösen der Parkbremse elektrohydraulisch erfolgt, die Feststellung jedoch mechanisch ist.

In weiterer Ausgestaltung ist zwischen dem Nachstellhebel und seinem Gegenlager eine keilartige Verschleißnachführung vorgesehen, wobei eine Feder zum Zurückholen des Bremsbelags sowie zum Zusammenhalt von Bremsbelag, Stützhebel und Nachstellhebel vorgesehen ist, was eine einfache raumsparende Bauweise ermöglicht.

Es ist bevorzugt, dass die Arbeitseinheit einen Stufenkolben mit Niederdruckanschluss, Hochdruckanschluss und Vorratsdruckanschluss aufweist, wobei der Stufenkolben eine stufenförmig angeordnete Reduzierung seiner Kolbendurchmesser aufweist, und vorzugsweise die Flächeninhalte der einzelnen Stufen der Arbeitseinheit im Verhältnis 2:1 ausgebildet sind. Hierbei ist weiterhin vorgesehen, dass die einzelnen Stufen der Arbeitseinheit mit dem Vorratsdruckanschluss oder dem Hochdruckanschluss verbindbar sind. Daraus ergibt sich der Vorteil bei erfindungsgemäßem Einsatz dieser Arbeitseinheit, dass dieser umschaltbare Stufenkolben zu jedem Zeitpunkt während einer Bremsung eine als Umschaltung des Keilwinkels wirksame Anpassung ausführen kann. Bei drei kombinierbaren Stufen ergeben sich beispielsweise 8 verschiedene Winkeleinstellungen.

In einer weiteren Ausführungsform ist vorgesehen, dass die Vorrichtung Drucksensoren zur Erfassung von Zuspannkraft und Bremskraft, sowie des Bremsbelagverschleißes aufweist.

Die Vorrichtung ist außerdem mit einem Vorratsdruckkreis mit Ausdehnungsgefäß und Absperrventil ausgerüstet, wobei diese Komponenten sich an der Bremse befinden und eine vorteilhaft einfach Hydraulikbauweise ermöglichen.

Es ist schließlich vorteilhaft, wenn die Scheibenbremse eine Steuerungseinrichtung aufweist, insbesondere eine Steuerungseinheit, die entweder direkt an der Bremse angeordnet ist oder als sonstige Steuerungseinrichtung eines übergeordneten Steuerungssystem des Fahrzeugs ausgelegt ist, die dazu ausgelegt ist, bei einer Bremsung zumindest die Keilwinkeleinstellung zu steuern oder zu regeln, wobei die Regelung vorzugsweise in Abhängigkeit von der Zustellkraft und dem aktuell eingestellten Keilwinkel erfolgt.

Die Erfindung schafft auch nach einer Weiterbildung der weiteren in den Ansprüchen genannten Varianten eine einfache und unkomplizierte Hebelausgestaltung.

Nachfolgend wird die Erfindung anhand der in den schematischen Figuren der Zeichnung angegebenen Ausführungsbeispiele näher erläutert. Es zeigt dabei:
- Figur 1: ein erstes Ausführungsbeispiel der erfindungsgemäßen Vorrichtung;
- Figur 2: ein zweites Ausführungsbeispiel der erfindungsgemäßen Vorrichtung;
- Figur 3: eine schematische Längsschnittdarstellung einer Arbeitseinheit;
- Figur 4: ein drittes Ausführungsbeispiel der erfindungsgemäßen Vorrichtung; und
- Figur 5: ein viertes Ausführungsbeispiel der erfindungsgemäßen Vorrichtung.

Gleiche Bezugszeichen gelten für Teile mit gleicher oder ähnlicher Funktion.

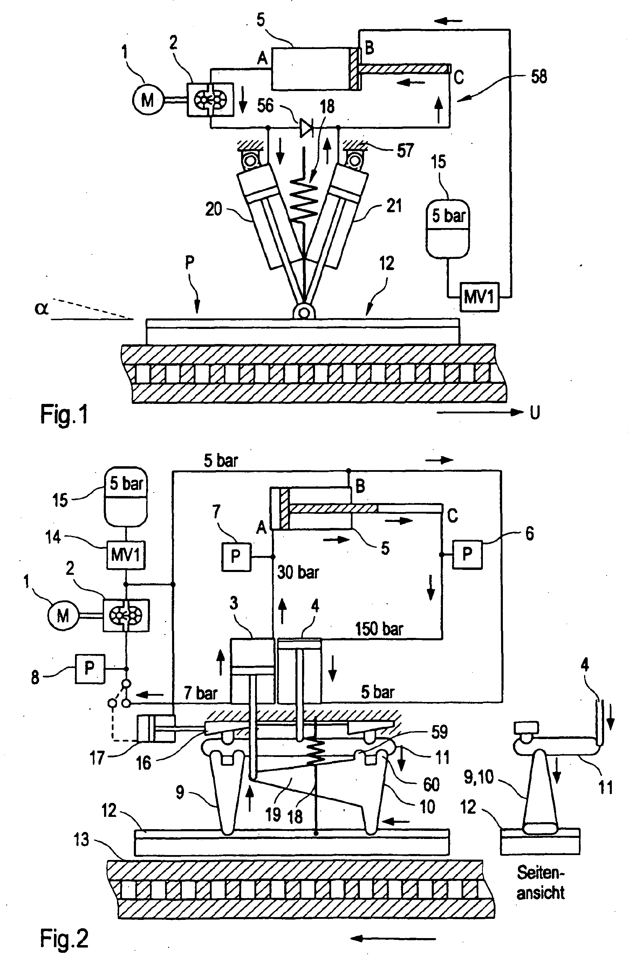

Fig. 1 stellt eine Prinzipskizze zur Veranschaulichung der Erfindung dar, die auch als eigenes Ausführungsbeispiel ausgestaltet werden kann.

Ein Elektromotor 1 als Aktuator wirkt auf eine Zuspannvorrichtung mit einer bremsinternen Hydraulik ein. Dies wird dadurch realisiert, dass der Elektromotor eine Flügelradpumpe 2 antreibt, die in einen hydraulischen Kreis 58 geschaltet ist, der auf Hydraulikkolben von Hydraulikzylindern 20, 21 einwirkt, die an der Rückenplatte eines Bremsbelages angelenkt sind. Der reaktionsseitige Bremsbelag und der Bremssattel sind an sich nicht dargestellt: es sind Fest-, Schiebe- und Schwenksattelkonzepte und Mischformen dieser Konzepte denkbar (alles nicht dargestellt). Zwischen den Anschlüssen der Hydraulikzylinder 20, 21 ist ein Rückschlagventil 56 im Kreis 58 angeordnet.

Die zwei Hydraulikzylinder 20, 21 sind nach Fig. 1 V-förmig zueinander ausgerichtet und hier beispielhaft an einem gemeinsamen Befestigungspunkt mit dem Bremsbelag 12 gelenkig verbunden. Sie stützen sich mit ihren anderen Enden an einem nicht weiter dargestellten festen Gegenlager (Bremssattel 57) ab. Dieses bildet auch einen Befestigungspunkt für eine Feder 18, die den Bremsbelag 12 von einer Bremsscheibe 13 auf ein bestimmtes so genanntes Lüftspiel entfernt.

Die Hydraulikzylinder 20, 21 sind mit ihren Druckanschlüssen an den hydraulischen Kreis 58 angeschlossen, in den eine Zahnradpumpe 2 geschaltet ist, die vom Elektromotor 1 angetrieben wird. Da beide Hydraulikzylinder 20, 21 mit dem Hydraulikkreis verbunden sind und zunächst gleichzeitig mit demselben Druck beaufschlagt werden, ergibt sich zunächst für kleine Bewegungen ihrer Kolben eine waagerechte Verschiebung des Bremsbelags 12 zur Bremsscheibe 13 hin. Hier wird aber durch die gewählte Anordnung nach der Anlage des Bremsbelags 12 an der Bremsscheibe 13 auch eine Rückkopplung auf den hydraulischen Kreis 58 erreicht, die dazu führt, dass aus der anfänglichen Parallelschaltung der Zylinder auch infolge des Rückschlagventils 56 eine Reihenschaltung wird.

Bei der in Fig. 1 dargestellten hydraulischen und geometrischen Anordnung der Hydraulikzylinder 20, 21, die dazu führt, dass nach dem Anliegen am Bremsbelag 12 aus der anfänglichen Parallelschaltung eine Reihenschaltung mit einer Arbeitseinheit 5 wird, deren Aufbau weiter unten ausführlich beschrieben wird, ergibt sich nach der Anlage des Bremsbelags 12 an der Bremsscheibe 13 auch eine Bewegungskomponente des Bremsbelags 12 in Umfangsrichtung der Bremsscheibe, wenn sich die Bremsscheibe 13 in der durch den Pfeil angezeigten Richtung dreht. Derart wird ein Keileinzugprinzip mit Selbstverstärkung der Bremskraft realisiert (schematisch ist links der Fig. 1 der Keilwinkel α dargestellt).

Die Keilwirkung von Gegenlager und Bremsbelag 12 wird allerdings nicht mit einem Keil an sich sondern in völlig anderer Art durch Stützen realisiert, die entweder wie in Fig. 1 mit einer Stelle des Bremsbelags 12 oder - vorzugsweise - mit versetzten Stellen des Belages verbunden sind.

Verschiebt sich der Bremsbelag 12 (Fig. 1) nach erster Bewegung der Flügelradpumpe 2 in Richtung des Pfeils P und kommt am Bremsbelag 12 und dieser an der Bremsscheibe 13 zur Anlage, wird der zweite Hydraulikzylinder 21 stärker zusammengedrückt als der erste Hydraulikzylinder 20.

Auf Grund der jetzt in Wirkung tretenden hydraulischen Reihenschaltung wird der im zweiten Hydraulikzylinder 21 erzeugte Druck auf einen Hochdruckanschluss C einer Arbeitseinheit 5 (Zylinder) übertragen, deren Kolben einen anderen Druck auf einer Niederdruckseite A über die Zahnradpumpe 2, die von dem Elektromotor 1 angetrieben wird, auf den ersten Hydraulikzylinder 20 überträgt. Durch diesen unterschiedlichen Druck wird der erste Hydraulikzylinder 20 um ein unterschiedliches Maß geringer ausgefahren, so dass sich die Bewegung des Bremsbelags 12 schräg nach rechts unten ergibt, was einem bestimmten Keilwinkel entspricht.

Die Druckanschlüsse der Hydraulikzylinder 20, 21 sind über das Richtungsventil 56, beispielsweise ein Rückschlagventil, verbunden, wodurch eine gerichtete Strömung im Hydraulikkreis ermöglicht ist, die in dieser hydraulischen Beispielschaltung erforderlich ist. Dieser oben beschriebene Vorgang ist durch die Zahnradpumpe 2 über den Elektromotor 1 steuerbar, wodurch auch der Bremsvorgang mit einer geringen Leistung des Elektromotors 1 initiiert wird, um dann durch die Selbstverstärkung die Bremskraft zu erzeugen.

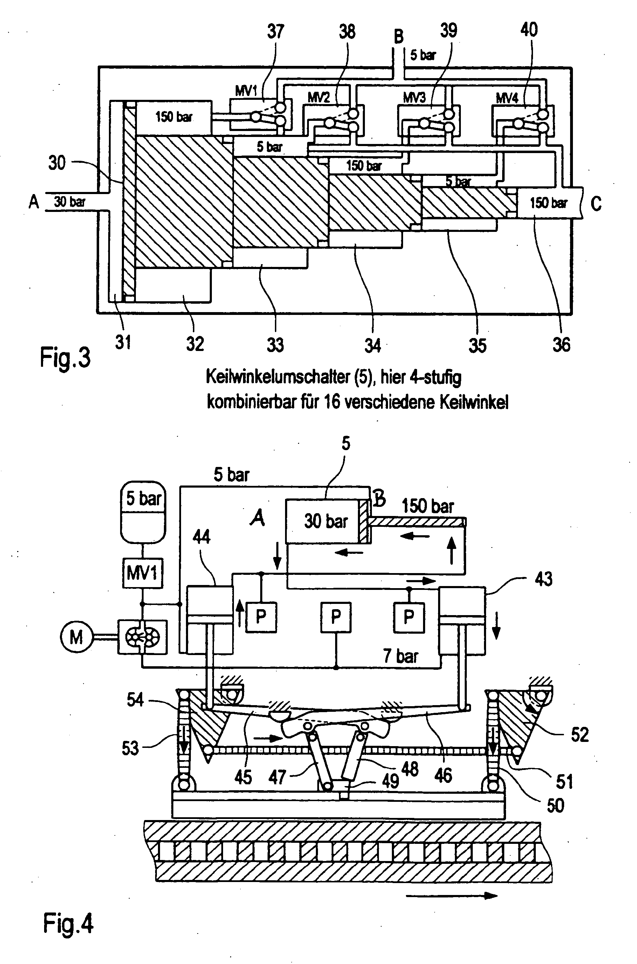

Mittels der Arbeitseinheit 5, die einen Stufenkolben 30 (Fig. 3) mit stufenförmig angeordneter Reduzierung der Kolbendurchmesser besitzt, wird eine bremsverstärkende Wirkung nach dem Keileinzugprinzip und eine Einstellbarkeit des Keilwinkels erreicht.

Dabei kann zu jedem Zeitpunkt der Bremsung - z.B. mit Hilfe eines Regelkreises, der den Reibwert und/oder andere Parameter wie die Normalkraft oder dgl. berücksichtigt - eine beliebige Keilwinkelanpassung in feinen Abstufungen vorgenommen werden, indem die unterschiedlichen Reduktionsstufen der Arbeitseinheit 5 ein- bzw. umgeschaltet werden, was weiter unten noch erläutert wird.

An die Arbeitseinheit 5 ist ein Vorratskreis an einem Vorratskreisanschluss B angeschlossen. Der Vorratskreis besitzt ein Ausdehnungsgefäß 15 für Volumenänderung durch Kolbenausfahren sowie Verschleißnachstellung, und ein Absperrventil 14, welches bei gelöster Bremse zur Fixierung der Ruhestellung dient.

In Fig. 3 ist die Arbeitseinheit 5 mit einem Stufenkolben 30 in einem Längsschnitt gezeigt. Der Niederdruckanschluss A ist mit einer Niederdruckseite 31, der Vorratsdruckanschluss B; insbesondere mit Magnetventilen 37 bis 40; und der Hochdruckanschluss C mit einer Hochdruckseite 36 verbunden. Der Stufenkolben 30 besitzt in diesem Beispiel vier Arbeitskammern bzw. Stufen 32, 33, 34, 35 mit jeweils unterschiedlich großen Kolbendurchmessern. Die Flächeninhalte der einzelnen Kammern bzw. Stufen sind jeweils im Verhältnis 2:1 ausgebildet. So ist zum Beispiel die Fläche der Stufe 34 halb so groß wie die Fläche der Stufe 33. Auch die Fläche der Stufe 35 ist nur halb so groß wie die Fläche der Stufe 34. Jede dieser Stufen 33 bis 35 lässt sich individuell wahlweise durch Schalten der Magnetventile 37 bis 40 mit dem Vorratsdruck im Vorratskreis am Anschluss B oder der Hochdruckseite am Anschluss C verbinden. Am Beispiel dieser vierstufigen Zylinderreduzierungen kann durch entsprechende Ansteuerung der Magnetventile 37 bis 40 das Flächenverhältnis des Kolbens 30 in der Kammer der Niederdruckseite 31 (Anschluss A) gegenüber der gesamtwirkenden Fläche am Anschluss C in 16 Stufen eingestellt werden. Die Magnet- bzw. Umschaltventile 37 bis 40 sind so ausgeführt, dass während des Umschaltens selbst kurzzeitig keine Verbindung zwischen Anschluss B und C stattfindet.

Wird nun diese Arbeitseinheit 5 mit dem Stufenkolben 30 in Verbindung mit einem oder mehreren Hydraulikzylindern geschaltet, wie das erste Ausführungsbeispiel in Fig. 1 oder weitere Beispiele in Fig. 3 bis 5 zeigen, so kann zu jedem Zeitpunkt während einer Bremsung eine sich als Umschaltung des Keilwinkels wirksame Anpassung vorgenommen werden, damit die Selbstverstärkung der Bremse immer im optimalen Leistungspunkt gehalten werden kann.

Durch den örtlich begrenzten Hydraulikeinsatz direkt an der Bremse kann bei Vermeidung von flexiblen Bremsleitungen und Ausdehnungsbehältern aus Kunststoff die Einlagerung von Wasser in der hygroskopischen Bremsflüssigkeit weitgehende verhindert werden, was die Verfügbarkeit der Vorrichtung verlängert.

Fig. 2 zeigt ein zweites Ausführungsbeispiel der erfindungsgemäßen Vorrichtung mit einer ergänzenden Parkbremsfunktion.

Auch hier werden wie in Fig. 1 zwei Hydraulikzylinder 3, 4 und die Arbeitseinheit 5 verwendet. In diesem Fall jedoch sind die Hydraulikzylinder 3, 4 als doppeltwirkende Zylinder mit zwei Druckanschlüssen ausgebildet. Zwischen die ersten Druckanschlüsse der Hydraulikzylinder 3, 4 ist die Arbeitseinheit 5 geschaltet. Von der Zahnradpumpe 2 verläuft die Hydraulikleitung zum zweiten Druckanschluss des ersten Hydraulikzylinders 3, und der zweite Druckanschluss des zweiten Hydraulikzylinders 4 ist mit dem Vorratsdruck verbunden.

Zunächst erfolgt die Beschreibung der Parkbremse nach diesem zweiten Ausführungsbeispiel.

Zwei V-förmige Stützhebel 9, 10 sind mit ihren unteren z.B. halbzylindrischen "spitzen" Enden mit dem Bremsbelag 12 verschwenkbar verbunden, wobei diese Enden in einem Abstand angeordnet sind. Jeweils zwei obere Enden der V-förmigen Stützhebel 9, 10 stehen ebenfalls verschwenkbar z.B. mit jeweils zwei weiteren halbzylindrischen Enden 59, 60, mit einem Nachstellhebel 11 in Verbindung, der sich über eine Verschleißnachführung 16 an einem festen Gegenlager abstützt. Die Enden der Stützhebel 9, 10 sind zum Abrollen bzw. Abwälzen in korrespondierend ausgebildeten Lagerstellen beispielsweise rund ausgebildet, so dass bei ihren Bewegungen günstige Roll- bzw. Wälzreibung stattfindet.

Der Stützhebel 10 weist einen mit ihm fest verbundenen Hebel 19 auf, der an seinem freien Ende mit dem Kolben des ersten Hydraulikzylinders 3 angelenkt ist. Seine Funktion wird später erläutert. Der Nachstellhebel 11 ist mit dem Kolben des zweiten Hydraulikzylinders 4 gelenkig verbunden.

Der Bremsbelag 12 wird von einer Zugfeder 18 am festen Gegenlager gehalten, welche auch die Stützhebel 9, 10, den Nachstellhebel 11 und die Vcrschleißnachführung 16 zusammenhält.

Durch diese Anordnung der zwei V-förmigen Stützhebeln 9, 10 kann zur Aktivierung der Parkbremse die Zahnradpumpe direkt in den Anschluss A der Arbeitseinheit 5 einspeisen, indem sie mit diesem über ein nicht gezeigtes Umschaltventil verbunden wird. Der Stufenkolben 30 der Arbeitseinheit 5 verstärkt diesen Hydraulikdruck und leitet ihn über den Hochdruckanschluss C in den zweiten Hydraulikzylinder 4 ein, so dass dessen Kolben ausfährt und über den Nachstellhebel 11 die Stützhebel 9, 10 nach unten bewegt, wodurch der Bremsbelag 12 an die Bremsscheibe 13 angedrückt wird. Der Nachstellhebel 11 wird dabei so weit zur Bremsscheibe 13 hin bewegt, bis an der Hebeluntersetzungsseite der Stützhebel 9, 10 (siehe Seitenansicht in Fig. 2) der untere Totpunkt überschritten wird. Auch ohne Betätigungskraft des zweiten Hydraulikzylinders 4 bleibt damit die Bremse als Parkbremse maximal zugespannt.

Erfolgt nun z.B. an einem Hang beim Abstellen des Fahrzeugs eine Bewegung der Bremsscheibe 13, zum Beispiel nach links, heben sich die beiden Stützhebel 9, 10 jeweils mit ihren rechten oberen Enden leicht vom Nachstellhebel ab. Sie verschwenken dabei um die linken oberen Enden. Durch die nun schräge Hebelwirkung der Stützhebel 9, 10 entsteht eine weitere Erhöhung der Zustellkraft, da die Hebel eine Klemmkeilwirkung erzeugen. Der Winkel der beiden Stützhebel 9, 10 ist so gewählt, dass der Keilwinkel α so spitz ist, dass sich die Bremse weiter zustellt. Durch die symmetrisch V-förmige Gestaltung der beiden Stützhebel 9, 10 wirkt die Parkbremse bzw. Feststellbremse gleichermaßen in beide Betätigungsrichtungen bzw. Fahrtrichtungen des Fahrzeugs.

Zum Lösen der Feststellbremse wird der Kolben des zweiten Hydraulikzylinders 4 nach oben bewegt. Durch das Rastmoment im unteren Totpunkt des Nachstellhebels 11 kann ein sehr hohes Lösemoment erreicht werden, um selbst bei starker Verkeilzustellung ein sicheres Lösen zu erreichen. Gegebenenfalls kann die Druckverstärkung der Arbeitseinheit 5 benutzt werden, um mit dem zweiten Hydraulikzylinder 4 mit einem hohen hydraulischen Druck die Bremse zu lösen.

Während einer Betriebsbremsung bewirkt das oben beschriebene Verschwenken der V-förmigen Stützhebel 9, 10 um ihre oberen Enden, dass auch ohne Betätigung des Nachstellhebels 11, also des zweiten Hydraulikzylinders 4, die Funktion einer selbsteinziehenden Keilkraftverstärkung erreicht wird. So kann beispielsweise bei einer Horizontalverschiebung des Bremsbelags 12 um zum Beispiel 10 mm durch die schräge Abstützung der Stützhebel 9, 10 ein senkrechter Zustellweg von zum Beispiel 2 mm erlangt werden. Der Nachstellhebel 11 muss dadurch lediglich den Höhenunterschied zwischen einem maximal spitzen und einem maximal stumpfen Keilwinkel ausgleichen. Dies kann zur Vergrößerung des Hebelübersetzungsverhältnisses genutzt werden. Damit verringern sich die Kräfte, welche auf die Hydraulikzylinder 3, 4 wirken.

Es folgt nun eine Erläuterung der Keilwinkeleinstellung und der Funktion des ersten Hydraulikzylinders 3.

Mit Hilfe des Hebels 19 am Stützhebel 10 kann die horizontale Bewegung des Bremsbelags 12 auf eine vertikale Bewegung umgelenkt werden, da der Stützhebel 10 je nach Fahrtrichtung wahlweise um sein oberes linkes oder rechtes Ende verschwenkt. Dies löst wahlweise eine vertikale Druck- oder Zugbewegung auf den Kolben des ersten Hydraulikzylinders 3 und eine dementsprechende Druckänderung desselben im angeschlossenen Hydraulikkreis aus. Bei entsprechender Dimensionierung kann die um den Kolbenstangendurchmesser reduzierte Kolbenunterfläche, und somit die reduzierte Zugkraft durch den längeren Hebelarm des Hebels 19 kompensiert werden, da die Stützhebel 9, 10 in diesem Fall um den rechten oberen Lagerpunkt verschwenken und sich somit die Hebellänge des Hebels 19 verlängert.

Durch die Arbeitseinheit 5 kann in Abhängigkeit des horizontalen Verstellwegs des Bremsbelags 12, der über den ersten Hydraulikzylinder 3 in oben beschriebener Weise erst in eine vertikale Bewegung und dann in eine Druckänderung umgewandelt wurde, eine einstellbare Zustellbewegung durch den zweiten Hydraulikzylinder 4 bewirkt werden, der in Reihe hydraulisch mit dem Hochdruckanschluss C der Arbeitseinheit 5 verbunden ist. Dieses entspricht einem verstellbaren Keilwinkel.

Der einstellbare Keilwinkel sorgt dafür, dass sich die Bremsvorrichtung immer im Bereich einer sehr hohen Eigenverstärkung befindet. Die Zahnradpumpe 2 kann somit mit vergleichsweise geringem Kraftaufwand (der Elektromotor 1 mit geringer elektrischer Leistung) diesen Balancezustand steuern. Hierzu wird beispielsweise der hydraulische Volumenstrom durch den ersten Hydraulikzylinder 3 durch die Zahnradpumpe 2 geführt, so dass sich dessen Kolben nur in Abhängigkeit von der Bewegung des Elektromotors 1 verstellen lässt.

Bei einem gesamten vertikalen Zustellbereich von 4 mm können so 11,5 mm horizontaler Bewegung des Bremsbelags durch die Keilwirkung der Stützhebel 9, 10 entstehen, so dass über den zweiten Hydraulikzylinder 4 und den Nachstellhebel 11 nur noch 2,5 mm vertikaler Verstellweg entsteht.

Der Reibepunkt zu Beginn einer Bremsung kann mit Hilfe eines Drucksensors 7 am Niederdruckanschluss A der Arbeitseinheit 5 hochauflösend erfasst werden. Entsprechend kann der Reibepunkt mit Hilfe der Verschleißnachführung 16 immer im optimalen Arbeitspunkt gehalten werden.

Wird der Verschleiß des Bremsbelags 12 mit Hilfe eines Hydraulikzylinders 17 und der keilförmigen Verschleißnachführung 16 wie in Fig. 3 gezeigt verstellt, so kann der absolute Belagverschleiß mittels Druckmessung des Drucksensors 7 oder eines Drucksensors 8 am Auslass der Zahnradpumpe 2 gemessen werden. Durch das Ausdehnungsgefäß 15 fällt der absolute Systemdruck in Abhängigkeit des Verschleißwegs ab. Bei Verlust an Bremsflüssigkeit wird ebenfalls ein Druckabfall registriert, so dass in beiden Fällen ein Werkstattbesuch über ein fahrzeuginternes Meldesystem angezeigt werden kann.

Fig. 4 stellt ein drittes Ausführungsbeispiel der erfindungsgemäßen Vorrichtung dar. Hierbei ist der Hydraulikkreis ähnlich zu dem nach Fig. 3 ausgestaltet. Eine Verschleißnachführung 16, 17 ist nicht eingezeichnet, aber auch möglich. Stützhebel 47, 48 stehen jeweils über Kraftverstärkerhebel 45, 46 mit einem ersten und zweiten Hydraulikzylinder 43, 44 in mechanischer Wirkungsverbindung. Die Kraftverstärkerhebel 45, 46 rollen bzw. wälzen auf festen Gegenlagern ab, wodurch die korrespondierenden Reibwerte gering gehalten werden. Der Stützhebel 47 dient mit Antrieb durch den ersten Hydraulikzylinder 43 zur Keilwinkeleinstellung, der Stützhebel 48 mit Antrieb durch den zweiten Hydraulikzylinder 44 zur Einleitung der Zuspannkraft.

Die Stützhebel 47, 48 sind über eine Kippvorrichtung 49 mit dem Bremsbelag 12 verbunden. Die Kippvorrichtung 49 dient zum sicheren Lösen der Parkbremse. Der Bremsbelag 12 ist mit einer Parallelführung versehen, die aus Parallelführungsstützhebeln 50, 53, Kraftumlenkungselementen 52, 54 und einer Längsverbindung 51 besteht.

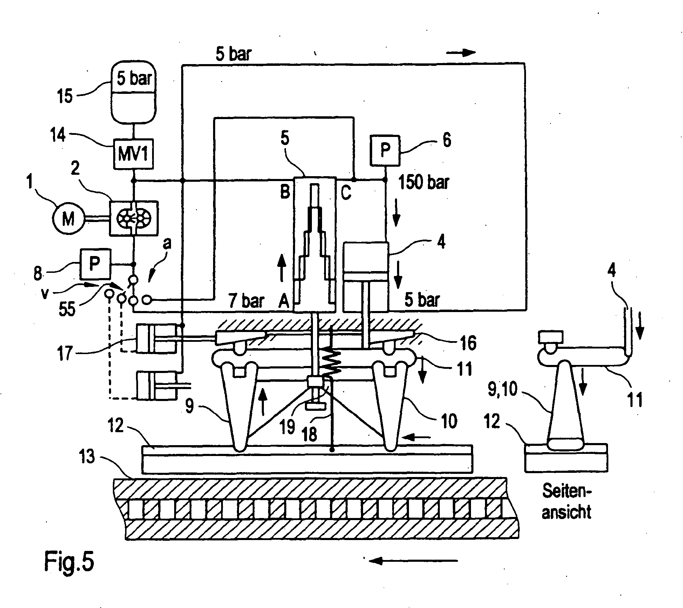

Ein viertes Ausführungsbeispiel der erfindungsgemäßen Vorrichtung zeigt Fig. 5. Der mechanische Aufbau entspricht im Wesentlichen dem zweiten Ausführungsbeispiel nach Fig. 3, wobei jedoch beide Stützhebel 9, 10 einen fest angebrachten Hebel 19 aufweisen und symmetrisch ausgebildet sind. Die freien Enden der Hebel 19 wirken mit einer Kolbenstange der Arbeitseinheit 5 zusammen, die hier den ersten Hydraulikzylinder bildet. Das Ende der Kolbenstange ist so ausgebildet, dass die freien Enden der Hebel 19 um einen bestimmten vertikalen Weg verschiebbar sind, bevor eine vertikale Bewegung des Kolbens der Arbeitseinheit 5 über zwei Anschläge eingeleitet wird.

Der zweite Hydraulikzylinder 4 ist wie in Fig. 3 am Hochdruckanschluss C der Arbeitseinheit 5 angeschlossen, wobei der Niederdruckanschluss A der Arbeitseinheit 5 mit der Zahnradpumpe 2 in hydraulischer Verbindung steht.

Weiterhin ist eine Einrichtung zur Umschaltung 55 der Betriebsart am Auslass der Zahnradpumpe 2 dargestellt. In der einen Stellung a wird die Parkbremse angelegt, indem die Zahnradpumpe 2 direkt auf den zweiten Hydraulikzylinder 4 wirkt. In der anderen Stellung v ist die Arbeitseinheit 5 in den Volumenstrom der Zahnradpumpe 2 geschaltet. Diese Funktion ist oben im zweiten Ausführungsbeispiel nach Fig. 3 beschrieben. In den Stellungen v werden Hydraulikzylinder 17 (Verschleißnachführung beidseitig optional möglich) der Verschleißnachführung 16 des Bremsbelags 12 betätigt. Die Umschaltung 55 kann beispielsweise automatisch oder teilautomatisch mittels Magnetventil erfolgen.

Somit ergeben sich einzeln oder in Kombination folgende Eigenschaften und Vorteile:
- Bremskrafterzeugung nach dem Keileinzugprinzip sowie elektromotorischer Antrieb
- Kraftübertragung hydraulisch mittels Bremsflüssigkeit
- Festsattel mit beidseitig adaptiver Belagverschleißnachführung
- Verschleißnachführung auch für rückseitige Beläge ohne zusätzlichen Motor
- Lange Wartungsintervalle für Bremsflüssigkeitswechsel (5 bis 10 Jahre durch Verhinderung von Wasseraufnahme laut Hersteller)
- Wartungsintervalle der Bremsflüssigkeit zusammen mit Belagwechsel möglich
- Keilwinkelanpassung auch während aktiver Bremsung möglich
- Vierstufige Umschaltung ermöglicht 16 verschiedene Keilwinkel im vorliegenden Ausführungsbeispiel
- Verwendung eines relativ kleinen Elektromotors mit entsprechender Leistung
- Kraftumsetzung Motor/Hydraulik durch Zahnradpumpe ohne Untersetzungsgetriebe
- Einfache Kraftmessung durch zwei Drucksensoren
- Direkte Messung der Zuspannkraft sowie der Bremskraft möglich
- Genaue Messung bzw. Erfassung des Anlegepunkts/Reibepunkts der Bremsbeläge durch Differenzdruckmessung
- Messung des Belagverschleißes ohne zusätzliche Verschleißwegsensoren
- Funktion einer Handbremse (Feststellbremse, Parkbremse) mit Keilkraftverstärkung (selbstblockierend) in beide Bewegungsrichtungen eines Fahrzeugs wirksam

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

So kann zum Beispiel ein erster Drucksensor 6 zur Erfassung der Zuspannkraft, ein zweiter Drucksensor 7 zur Erfassung der Bremskraft und ein dritter Drucksensor 8 zur Erfassung der Ansteuerkraft der Zahnradpumpe 2 sowie der Gesamtbremskraft am Hydraulikzylinder 3 dienen. Bei nicht betätigter Zahnradpumpe 2 dient der dritte Drucksensor 8 zur Erfassung des Drucks im Ausdehnungsgefäß 15.

Durch eine Verbreiterung der Stützhebel 9, 10 im Bereich des Bremsbelags 12 (Fig. 2 und 5, Seitenansicht) kann eine gleichmäßige Bremsbelagführung und damit Abnutzung in Querrichtung des Bremsbelags 12 ermöglicht werden.

Der Stufenkolben 30 der Arbeitseinheit 5 kann weniger als 4 aber auch mehr als 4 Abstufungen aufweisen.

### Bezugszeichenliste

- 1: Elektromotor
- 2: Zahnradpumpe
- 3: Erster Hydraulikzylinder zur Bremskraftaufnahme
- 4: Zweiter Hydraulikzylinder zur Erzeugung Zuspannkraft
- 5: Arbeitseinheit
- 6: Erster Drucksensor
- 7: Zweiter Drucksensor
- 8: Dritter Drucksensor
- 9: Erster Stützhebel
- 10: Zweiter Stützhebel
- 11: Nachstellhebel
- 12: Bremsbelag
- 13: Bremsscheibe
- 14: Absperrventil
- 15: Ausdehnungsgefäß
- 16: Verschleißnachführung
- 17: Hydraulikzylinder Verschleißnachführung
- 18: Feder
- 19: Hebel
- 20: Erster Hydraulikzylinder zur Keilwinkeleinstellung
- 21: Zweiter Hydraulikzylinder zur Einleitung Zuspannkraft
- 22: Stützelement
- 30: Stufenkolben
- 31: Niederdruckseite
- 32...35: Arbeitskammer
- 36: Hochdruckseite
- 37...40: Magnetventil
- 43: Erster Hydraulikzylinder zur Keilwinkelverstellung
- 44: Zweiter Hydraulikzylinder zur Einleitung Zuspannkraft
- 45,46: Kraftverstärkerhebel
- 47: Stützhebel Keilwinkeleinstellung
- 48: Stützhebel Zuspannkraft
- 49: Kippvorrichtung
- 50, 53: Parallelführungsstützhebel
- 51: Längsverbindung
- 52,54: Kraftumlenkungselement
- 55: Umschaltung Betriebsart
- 56: Richtungsventil
- 57: Bremssattel
- 58: Hydraulikkreis
- 59,60: Enden
- A, B, C: Anschlüsse
- a, n, v: Einstellungen
- G: Gegenlager
- MV: Magnetventil
- p: Druck
- U: Umfangsrichtung

## Patentansprüche

1. Scheibenbremse mit elektromotorischem Aktuator (1), der auf eine Zuspannvorrichtung zum Zuspannen wenigstens eines Bremsbelages (12) in Richtung einer Bremsscheibe (13) einwirkt, wobei die Zuspannvorrichtung eine bremseninterne Hydraulikanordnung aufweist und in selbstverstärkender Bauart ausgelegt ist, wobei der Bremsbelag (12) unter einem Keilwinkel an der Zuspannvorrichtung abgestützt ist, **dadurch gekennzeichnet, dass** die Hydraulikanordnung eine Arbeitseinheit (5) zur Keilwinkelumschaltung des Keilwinkels aufweist, unter dem der Bremsbelag (12) an der Zuspannvorrichtung abgestützt ist.

2. Scheibenbremse nach Anspruch 1, **dadurch gekennzeichnet, dass** die Hydraulikanordnung einen Hydraulikkreis (58) aufweist und dass die Arbeitseinheit (5) zur Keilwinkelumschaltung in den Hydraulikkreis (58) geschaltet ist.

3. Scheibenbremse nach Anspruch 2, **dadurch gekennzeichnet, dass** in den Hydraulikkreis (58) ein Zylinder (5) als Arbeitseinheit zur Keilwinkelumschaltung geschaltet ist.

4. Scheibenbremse nach Anspruch 1, 2 oder 3, **dadurch gekennzeichnet, dass** die Zuspannvorrichtung eine Hebelanordnung mit wenigstens einem oder mehreren Hebel(n) aufweist.

5. Scheibenbremse nach Anspruch 4, **dadurch gekennzeichnet, dass** der wenigstens eine Hebel V-förmig ausgebildet ist.

6. Scheibenbremse nach einem der vorstehenden Ansprüche, **dadurch gekennzeichnet, dass** die Zuspannvorrichtung eine mit einem Elektromotor (1) gekoppelte Zahnradpumpe (2) aufweist, die in den Hydraulikkreis (58) geschaltet ist.

7. Scheibenbremse nach einem der vorstehenden Ansprüche, **dadurch gekennzeichnet, dass** die Hydraulikanordnung der Zuspannvorrichtung zwei Hydraulikzylinder (3, 4; 20, 21) mit Hydraulikkolben aufweist, die jeweils mit einem ihrer Ende direkt oder über zwischengeschaltete Bauelemente mit einem Bremsbelag (12) in mechanischer Wirkungsverbindung stehen.

8. Scheibenbremse nach Anspruch 7, **dadurch gekennzeichnet, dass** die zwei Hydraulikzylinder (20,21) V-förmig zueinander ausgerichtet sind.

9. Scheibenbremse nach einem der vorstehenden Ansprüche 7 bis 8, **dadurch gekennzeichnet, dass** die zwei Hydraulikzylinder (20, 21) parallel zueinander ausgerichtet sind.

10. Scheibenbremse nach einem der vorstehenden Ansprüche 7 bis 9, **dadurch gekennzeichnet, dass** die Hydraulikzylinder (20, 21, 43, 44) hydraulisch in Reihe mit der Arbeitseinheit (5) und der Zahnradpumpe (2) geschaltet sind, wobei die Hydraulikzylinder (20, 21, 43, 44) durch ein zwischen ihre Hydraulikanschlüsse geschaltetes Richtungsventil (56) hydraulisch gekoppelt sind.

11. Scheibenbremse nach einem der.vorstehenden Ansprüche 7 bis 10, **dadurch gekennzeichnet, dass** die Hydraulikzylinder (20, 21, 43, 44) doppeltwirkende Hydraulikzylinder sind, und wobei zwischen ihren ersten Druckanschlüssen die Arbeitseinheit (5) und zwischen ihren zweiten Druckanschlüssen die Zahnradpumpe (2) hydraulisch zwischengeschaltet ist.

12. Scheibenbremse nach einem der Ansprüche 4 bis 11, **dadurch gekennzeichnet, dass** die Hebelanordnung zwei Stützhebel aufweist, die sich am Bremsbelag abstützen und die mit einem oder beiden der Hydraulikzylinder in Wirkverbindung stehen.

13. Scheibenbremse nach Anspruch 12, **dadurch gekennzeichnet, dass** die Stützhebel (47, 48) über Kraftverstärkerhebel (45, 46) mit den Hydraulikzylindern (20, 21, 43, 44) in Wirkungsverbindung stehen.

14. Scheibenbremse nach einem der Ansprüche 12 oder 13, **dadurch gekennzeichnet, dass** die Stützhebel (47, 48) mit jeweils einem Ende über eine Kippvorrichtung (49) mit dem Bremsbelag (12) in Wirkungsverbindung stehen, wobei die Kippvorrichtung (49) mit den Stützhebeln (47, 48) und dem Bremsbelag (12) gelenkig verbunden ist.

15. Scheibenbremse nach einem der vorstehenden Ansprüche, **dadurch gekennzeichnet, dass** der Bremsbelag (12) mit einer Parallelführungseinrichtung (50, 51, 52, 53, 54) versehen ist.

16. Scheibenbremse nach einem der Ansprüche 12 bis 15, **dadurch gekennzeichnet, dass** der erste Hydraulikzylinder (3) mit einem Ende an den einen der Stützhebel (10) angelenkt ist und dass der zweite Hydraulikzylinder (4) über einen Nachstellhebel (11) mit beiden Stützhebeln (9, 10) in mechanischer Wirkungsverbindung steht.

17. Scheibenbremse nach einem der Ansprüche 7 bis 16, **dadurch gekennzeichnet, dass** die Hydraulikzylinder (3, 4) doppeltwirkend ausgebildet sind, wobei die Arbeitseinheit (5) zwischen den ersten Druckanschlüssen der Hydraulikzylinder (3, 4) zwischengeschaltet ist.

18. Scheibenbremse nach einem der Anspruche 7 bis 17, **dadurch gekennzeichnet, dass** der erste Hydraulikzylinder (3) hydraulisch im Volumenstrom der Zahnradpumpe (2) angeordnet ist, wobei der zweite Druckanschluss des ersten Hydraulikzylinders (3) mit der Zahnradpumpe (2) verbunden ist.

19. Scheibenbremse nach einem der Ansprüche 7 bis 18, **dadurch gekennzeichnet, dass** der Hydraulikzylinder (4) über den Nachstellhebel (11) mit den Stützhebeln (9, 10) in mechanischer Wirkungsverbindung steht.

20. Scheibenbremse nach einem der Ansprüche 7 bis 19, **dadurch gekennzeichnet, dass** der Hydraulikzylinder (4) doppeltwirkend ausgebildet ist, wobei die Zahnradpumpe (2), die Arbeitseinheit (5) und der Hydraulikzylinder (4) hydraulisch in Reihe geschaltet sind.

21. Scheibenbremse nach einem der Ansprüche 12 bis 20, **dadurch gekennzeichnet, dass** die Stützhebel (9, 10) eine V-förmige Ausgestaltung aufweisen, wobei sie jeweils mit einem abgerundeten Ende am Bremsbelag (12) und jeweils mit zwei abgerundeten Enden am Nachstellhebel (11) verschwenkbar gelagert sind.

22. Scheibenbremse nach einem der Ansprüche 12 bis 21, **dadurch gekennzeichnet, dass** die Stützhebel (9, 10) eine V-förmige Ausgestaltung aufweisen, wobei sie jeweils mit einem abgerundeten Ende am Nachstellhebel und jeweils mit zwei abgerundeten Enden am Bremsbelag verschwenkbar gelagert sind.

23. Scheibenbremse nach einem der vorstehenden Ansprüche 12 bis 22, **dadurch gekennzeichnet, dass** die Stützhebel (9, 10) in Richtung auf ihre mit den an dem Bremsbelag (12) gelagerten Enden hin in Richtung der Schwenkachse dieser Enden verbreitert ausgebildet sind.

24. Scheibenbremse nach einem der Ansprüche 16 bis 23, **dadurch gekennzeichnet, dass** zwischen dem Nachstellhebel (11) und seinem Gegenlager eine keilartige Verschleißnachführung (16) vorgesehen ist.

25. Scheibenbremse nach einem der Ansprüche 16 bis 24, **dadurch gekennzeichnet, dass** eine Feder (18) zum Zurückholen des Bremsbelags (12) sowie zum Zusammenhalt von Bremsbelag (12), Stützhebel (9, 10) und Nachstellhebel (11) vorgesehen ist.

26. Scheibenbremse nach einem der Ansprüche 6 bis 25, **dadurch gekennzeichnet, dass** die Zahnradpumpe (2) mit dem Hydraulikzylinder (4) für die Funktion einer Parkbremse hydraulisch verbindbar ausgebildet ist.

27. Scheibenbremse nach einem der vorstehenden Ansprüche, **dadurch gekennzeichnet, dass** die Arbeitseinheit (5) einen Stufenkolben (30) mit Niederdruckanschluss (A), Hochdruckanschluss (C) und Vorratsdruckanschluss (B) aufweist.

28. Scheibenbremse nach Anspruch 27, **dadurch gekennzeichnet, dass** der Stufenkolben (30) eine stufenförmig angeordnete Reduzierung seiner Kolbendurchmesser aufweist.

29. Scheibenbremse nach einem der vorstehenden Ansprüche, **dadurch gekennzeichnet, dass** die Flächeninhalte der einzelnen Stufen der Arbeitseinheit (5) im Verhältnis 2:1 ausgebildet sind.

30. Scheibenbremse nach einem der vorstehenden Ansprüche, **dadurch gekennzeichnet, dass** die einzelnen Stufen der Arbeitseinheit (5) mit dem Vorratsdruckanschluss (B) oder dem Hochdruckanschluss (C) verbindbar sind.

31. Scheibenbremse nach einem der vorstehenden Ansprüche, **dadurch gekennzeichnet, dass** die Vorrichtung Sensoren, vorzugsweise Drucksensoren (6, 7, 8) zur Erfassung von Zuspannkraft und Bremskraft, sowie des Bremsbelagverschleißes und ggf. weiterer möglicher Messgrößen aufweist.

32. Scheibenbremse nach einem der vorstehenden Ansprüche, **dadurch gekennzeichnet, dass** die Vorrichtung einen Vorratsdruckkreis mit Ausdehnungsgefäß (15) und Absperrventil (14) aufweist.

33. Scheibenbremse nach einem der vorstehenden Ansprüche, **dadurch gekennzeichnet, dass** die Vorrichtung einen Vorratsdruckkreis mit Ausdehnungsgefäß (15) und Absperrventil (14) aufweist.

34. Scheibenbremse nach einem der vorstehenden Ansprüche, **gekennzeichnet durch** eine Steuerungseinrichtung, insbesondere eine Steuerungseinheit, die entweder direkt an der Bremse angeordnet ist oder als sonstige Steuerungseinrichtung eines übergeordneten Steuerungssystem des Fahrzeugs ausgelegt ist, die dazu ausgelegt ist, zumindest die Keilwinkeleinstellung bei einer Bremsung zu steuern oder zu regeln.

## Claims

1. Disc brake with an electromotive actuator (1) which acts on an application device for applying at least one brake pad (12) in the direction of a brake disc (13), wherein the application device comprises a brake-internal hydraulic arrangement and is designed in a self-energising mode, wherein the brake pad (12) is supported on the application device at a wedge angle, **characterised in that** the hydraulic arrangement has a working unit (5) for the wedge angle change-over of the wedge angle, under which the brake pad (12) is supported on the application device.

2. Disc brake according to claim 1, **characterised in that** hydraulic arrangement comprises a hydraulic circuit (58), and that the working unit (5) is connected in the hydraulic circuit (58) for the wedge angle change-over.

3. Disc brake according to claim 2, **characterised in that** a cylinder (5) is connected in the hydraulic circuit (58) as a working unit for the wedge angle change-over.

4. Disc brake according to claim 1, 2 or 3, **characterised in that** the application device comprises a lever arrangement with at least one or several lever(s).

5. Disc brake according to claim 4, **characterised in that** the at least one lever is formed in a V-shaped manner.

6. Disc brake according to one of the preceding claims, **characterised in that** the application device comprises a gear pump (2) coupled to an electric motor (1), which is connected into the hydraulic circuit (58).

7. Disc brake according to one of the preceding claims, **characterised in that** the hydraulic arrangement of the application device comprises two hydraulic cylinders (3, 4; 20, 21) with hydraulic pistons, which are in mechanical operative connection with a brake pad (12) respectively with one of their ends directly or via interconnected components.

8. Disc brake according to claim 7, **characterised in that** the two hydraulic cylinders (20, 21) are arranged V-shaped to one another.

9. Disc brake according to one of the preceding claims 7 to 8, **characterised in that** the two hydraulic cylinders (20, 21) are aligned parallel to one another.

10. Disc brake according to one of the preceding claims 7 to 9, **characterised in that** the hydraulic cylinders (20, 21, 43, 44) are hydraulically connected in series with the working unit (5) and the gear pump (2), wherein the hydraulic cylinders (20, 21, 43, 44) are coupled hydraulically by a directional valve (56) connected between their hydraulic connectors.

11. Disc brake according to one of the preceding claims 7 to 10, **characterised in that** the hydraulic cylinders (20, 21, 43, 44) are double-acting hydraulic cylinders, and wherein the the working unit (5) is interconnected hydraulically between their first pressure connectors, and the gear pump (2) between their second pressure connectors.

12. Disc brake according to one of claims 4 to 11, **characterised in that** the lever arrangement comprises two supporting levers, which are supported at the brake pad, and which are in operative connection with one or both hydraulic cylinders.

13. Disc brake according to claim 12, **characterised in that** the supporting levers (47, 48) are in operative connection with the hydraulic cylinders (20, 21, 43, 44) via force-boosting levers (45, 46).

14. Disc brake according to one of claims 12 or 13, **characterised in that** the supporting levers (47, 48) are in operative connection with the brake pad (12) with respectively one end via a tilting device (49), wherein the tilting device (49) is connected to the supporting levers (47, 48) and the brake pad (12) in an articulated manner.

15. Disc brake according to one of the preceding claims, **characterised in that** the brake pad (12) is provided with a parallel guiding device (50, 51, 52, 53, 54).

16. Disc brake according to one of claims 12 to 15, **characterised in that** the first hydraulic cylinder (3) is linked to one of the supporting levers (10) with one end, and that the second hydraulic cylinder (4) is in a mechanical operative connection with the two supporting levers (9, 10) via an adjusting lever (11).

17. Disc brake according to one of claims 7 to 16, **characterised in that** the hydraulic cylinders (3, 4) are formed in a double-acting manner, wherein the working unit (5) is interconnected between the first pressure connectors of the hydraulic cylinders (3, 4).

18. Disc brake according to one of claims 7 to 17, **characterised in that** the first hydraulic cylinder (3) is hydraulically arranged in the volume flow of the gear pump (2), wherein the second pressure connector of the first hydraulic cylinder (3) is connected to the gear pump (2).

19. Disc brake according to one of claims 7 to 18, **characterised in that** the hydraulic cylinder (4) is in a mechanical operative connection with the supporting levers (9, 10) via the adjusting lever (11).

20. Disc brake according to one of claims 7 to 19, **characterised in that** the hydraulic cylinder (4) is formed in a double-acting manner, wherein the gear pump (2), the working unit (5) and the hydraulic cylinder (4) are connected in series hydraulically.

21. Disc brake according to one of claims 12 to 20, **characterised in that** the supporting levers (9, 10) comprise a V-shaped design, wherein they are mounted respectively with one rounded end at the brake pad (12) and respectively with two rounded ends at the adjusting lever (11) in a pivotable manner.

22. Disc brake according to one of claims 12 to 21, **characterised in that** the supporting levers (9, 10) comprise a V-shaped design, wherein they are mounted respectively with one rounded end at the adjusting lever and respectively with two rounded ends at the brake pad in a pivotable manner.

23. Disc brake according to one of the preceding claims 12 to 22, **characterised in that** the supporting levers (9, 10) are formed widened in the direction of their ends supported at the brake pad (12) towards the direction of the axis of rotation of these ends.

24. Disc brake according to one of claims 16 to 23, **characterised in that** a wedge-like wear tracking device (16) is provided between the adjusting lever (11) and its counter bearing.

25. Disc brake according to one of claims 16 to 24, **characterised in that** a spring (18) is provided for retracting the brake pad (12) and for the cohesion of the brake pad (12), supporting levers (9, 10) and adjusting lever (11).

26. Disc brake according to one of claims 6 to 25, **characterised in that** the gear pump (2) is formed in a hydraulically connectable manner with the hydraulic cylinder (4) for the function of a parking brake.

27. Disc brake according to one of the preceding claims, **characterised in that** the working unit (5) comprises a step piston (30) with low pressure connector (A), high pressure connector (C) and system pressure connector (B).

28. Disc brake according to claim 27, **characterised in that** the step piston (30) has a step-wise arranged reduction of its piston diameters.

29. Disc brake according to one of the preceding claims, **characterised in that** the surface contents of the individual steps of the working unit (5) are formed with a ratio of 2:1.

30. Disc brake according to one of the preceding claims, **characterised in that** the individual steps of the working unit (5) can be connected to the system pressure connector (B) or the high pressure connector (C).

31. Disc brake according to one of the preceding claims, **characterised in that** the device comprises sensors, preferably pressure sensors (6, 7, 8), for sensing the application force and brake force, and the brake pad wear and possibly further possible measurements.

32. Disc brake according to one of the preceding claims, **characterised in that** the device comprises a system pressure circuit with expansion vessel (15) and shut-off valve (14).

33. Disc brake according to one of the preceding claims, **characterised in that** the device comprises a system pressure circuit with expansion vessel (15) and shut-off valve (14).

34. Disc brake according to one of the preceding claims, **characterised by** a control device, especially a control unit, which is either arranged directly at the brake or is designed as another control device of a superordinated control system of the vehicle, which is designed to control or to regulate at least the wedge angle adjustment during a brake application.

## Revendications

1. Frein à disque comportant un actionneur (1) à moteur électrique, qui agit sur un dispositif de serrage pour serrer au moins une garniture (12) de frein dans la direction d'un disque (13) de frein, le dispositif de serrage ayant un agencement hydraulique interne au frein et étant conçu suivant un type de construction autorenforçante, la garniture (12) de frein étant appuyée suivant un angle cunéiforme sur le dispositif de serrage, **caractérisé en ce que** l'agencement hydraulique a un groupe (5) de travail pour la commutation de l'angle cunéiforme suivant lequel la garniture (12) de frein est appuyée sur le dispositif de serrage.

2. Frein à disque suivant la revendication 1, **caractérisé en ce que** l'agencement hydraulique a un circuit (58) hydraulique et **en ce que** le groupe (5) de travail pour la commutation de l'angle cunéiforme est monté dans le circuit (58) hydraulique.

3. Frein à disque suivant la revendication 2, **caractérisé en ce que** dans le circuit (58) hydraulique, un verin (5) est monté comme groupe de travail pour la commutation de l'angle cunéiforme.

4. Frein à disque suivant la revendication 1, 2 ou 3, **caractérisé en ce que** le dispositif de serrage a un dispositif à levier ayant au moins un levier ou plusieurs leviers.

5. Frein à disque suivant la revendication 4, **caractérisé en ce que** l'au moins un levier est en forme de V.

6. Frein à disque suivant l'une des revendications précédentes, **caractérisé en ce que** le dispositif de serrage a une pompe (2) à engrenage, qui est couplée à un moteur (1) électrique et qui est montée dans le circuit (58) hydraulique.

7. Frein à disque suivant l'une des revendications précédentes, **caractérisé en ce que** l'agencement hydraulique du dispositif de serrage a deux vérins (3, 4, 20, 21) hydrauliques qui sont en interaction mécanique avec une garniture (12) de frein, directement ou par des composants interposés, par l'une de leurs extrémités.

8. Frein à disque suivant la revendication 7, **caractérisé en ce que** les deux vérins (20, 21) hydrauliques sont orientés l'un par rapport à l'autre en forme de V.

9. Frein à disque suivant l'une de revendications précédentes 7 à 8, **caractérisé en ce que** les deux vérins (20, 21) hydrauliques sont dirigés parallèlement entre eux.

10. Frein à disque suivant l'une des revendications précédentes 7 à 9, **caractérisé en ce que** les vérins (20, 21, 43, 44) hydrauliques sont montés hydrauliquement en série avec le groupe (5) de travail et la pompe (2) à engrenage, les vérins (20, 21, 43, 44) hydrauliques étant couplés hydrauliquement par une vanne (56) directionnelle montée entre leurs raccords hydrauliques.

11. Frein à disque suivant l'une des revendications précédentes 7 à 10, **caractérisé en ce que** les vérins (20, 21, 43, 44) hydrauliques sont des vérins hydrauliques à double effet et dans lequel le groupe (5) de travail est interposé hydrauliquement entre leur premier raccord de pression et la pompe (2) à engrenage est interposée hydrauliquement entre leur deuxième raccord de pression.

12. Frein à disque suivant l'une des revendications 4 à 11, **caractérisé en ce que** le dispositif à levier a deux leviers d'appui qui s'appuient sur la garniture de frein et qui sont en interaction avec l'un des vérins hydrauliques ou avec les deux.

13. Frein à disque suivant la revendication 12, **caractérisé en ce que** les leviers (47,48) d'appui sont en interaction avec les vérins (20, 21, 43,44) hydrauliques par des leviers (45, 46), intensificateurs de force.

14. Frein à disque suivant l'une des revendications 12 ou 13, **caractérisé en ce que** les leviers (47, 48) d'appui sont en interaction avec la garniture (12) de frein par respectivement une extrémité par l'intermédiaire d'un dispositif (49) de basculement, le dispositif (49) de basculement étant articulé aux leviers (47, 48) d'appui et à la garniture (12) de frein.

15. Frein à disque suivant l'une des revendications précédentes, **caractérisé en ce que** la garniture (12) est munie d'un dispositif (50, 51, 52, 53, 54) de guidage parallèle.

16. Frein à disque suivant l'une des revendications 12 à 15, **caractérisé en ce que** le premier vérin (3) hydraulique est articulé par une extrémité à l'un des leviers (12) d'appui et **en ce que** le deuxième vérin (4) hydraulique est en interaction mécanique avec deux leviers (9, 10) d'appui par l'intermédiaire d'un levier (11) de rattrapage de jeu.

17. Frein à disque suivant l'une des revendications 7 à 16, **caractérisé en ce que** les vérins (3, 4) hydrauliques sont à double effet, le groupe (5) de travail étant interposé entre les premiers raccords de pression des vérins (3, 4) hydrauliques.

18. Frein à disque suivant l'une des revendications 7 à 17, **caractérisé en ce que** le premier vérin (3) hydraulique est disposé hydrauliquement dans le débit volume de la pompe (2) à engrenage, le deuxième raccord de pression du premier vérin (3) hydraulique communiquant avec la pompe (2) à engrenage.

19. Frein à disque suivant l'une des revendications 7 à 18, **caractérisé en ce que** le vérin (4) hydraulique est en interaction mécanique avec les leviers (9, 10) d'appui par l'intermédiaire du levier (11) de rattrapage de jeu.

20. Frein à disque suivant l'une des revendications 7 à 19, **caractérisé en ce que** le vérin (4) hydraulique est à double effet, la pompe (2) à engrenage, le groupe (5) de travail et le vérin (4) hydraulique étant montés hydrauliquement en série.

21. Frein à disque suivant l'une des revendications 12 à 20, **caractérisé en ce que** les leviers (9, 10) d'appui ont une conformation en V en étant montés respectivement basculant par une extrémité arrondie sur la garniture (12) de frein respectivement par deux extrémités arrondies sur le levier (11) de rattrapage de jeu.

22. Frein à disque suivant l'une des revendications 12 à 21, **caractérisé en ce que** les leviers (9, 10) d'appui ont une conformation en V en étant montés basculant respectivement par une extrémité arrondie sur le levier de rattrapage de jeu et respectivement par deux extrémités arrondies sur la garniture de frein.

23. Frein à disque suivant l'une des revendications précédentes 12 à 22, **caractérisé en ce que** les leviers (9, 10) d'appui s'élargissent dans la direction allant sur leurs extrémités montées sur la garniture (12) de frein dans la direction de l'axe de pivotement de ces extrémités.

24. Frein à disque suivant l'une des revendications 16 à 23, **caractérisé en ce qu'**un rattrapage (16) d'usure de type cunéiforme est prévu entre le levier (11) de rattrapage de jeu et sa butée.

25. Frein à disque suivant l'une des revendications 16 à 24, **caractérisé en ce qu'**il est prévu un ressort (18) de rappel de la garniture (12) de frein, ainsi que de maintien de la garniture (12) de frein, des leviers (9, 10) d'appui et du levier (11) de rattrapage de jeu.

26. Frein à disque suivant l'une des revendications 6 à 25, **caractérisé en ce que** la pompe (2) à engrenage peut communiquer hydrauliquement avec le vérin (4) hydraulique pour la fonction d'un frein de stationnement.

27. Frein à disque suivant l'une des revendications précédentes, **caractérisé en ce que** le groupe (5) de travail a un piston (30) à palier ayant un raccord (A) de basse pression, un raccord (C) de haute pression et un raccord (B) de pression de réserve.

28. Frein à disque suivant la revendication 27, **caractérisé en ce que** le piston (30) à palier a une réduction en forme de palier de son diamètre de piston.

29. Frein à disque suivant l'une des revendications précédentes, **caractérisé en ce que** les surfaces des divers paliers du groupe (5) de travail sont dans le rapport de 2:1.

30. Frein à disque suivant l'une des revendications précédentes, **caractérisé en ce que** les divers paliers du groupe (5) de travail peuvent communiquer avec le raccord (B) de pression de réserve ou avec le raccord (C) de haute pression.

31. Frein à disque suivant l'une des revendications précédentes, **caractérisé en ce que** le dispositif a des capteurs, de préférence des capteurs (6, 7, 8) de pression, pour détecter la force de serrage et la force de freinage, ainsi que l'usure de la garniture de frein et, le cas échéant, d'autres grandeurs de mesure éventuelles.

32. Frein à disque suivant l'une des revendications précédentes, **caractérisé en ce que** le dispositif a un circuit de pression de réserve ayant un ballon (15) de dilatation et une vanne (14) d'arrêt.

33. Frein à disque suivant l'une des revendications précédentes, **caractérisé en ce que** le dispositif a un circuit de pression de réserve ayant un ballon (15) de dilatation et une vanne (14) d'arrêt.

34. Frein à disque suivant l'une des revendications précédentes, **caractérisé par** un dispositif de commande, notamment un dispositif de commande qui est disposé directement sur le frein ou qui est conçu comme autre dispositif de commande d'un système de commande supérieur hiérarchiquement du véhicule, qui est conçu pour commander ou régler au moins le réglage de l'angle cunéiforme lors d'un freinage.
